# EUROPEAN PATENT SPECIFICATION

(11) **EP 2 922 391 B1**
(45) Date of publication and mention of the grant of the patent: **01.03.2017**
(21) Application number: 13857340.7
(22) Date of filing: 19.11.2013
(51) Int. Cl.: A01K 15/02

(54) **MOTIVATIONAL TOY FOR A PET**
MOTIVATIONSSPIELZEUG FÜR EIN HAUSTIER
JOUET DE MOTIVATION POUR ANIMAL DE COMPAGNIE

(30) Priority: 21.11.2012 SE 1251318
(43) Date of publication of application: 30.09.2015
(73) Proprietor: The Kyjen Company, LLC., Centennial, CO 80112 (US)
(72) Inventor: OTTOSSON, Nina, S-691 41 Karlskoga (SE)
(74) Representative: Johansson, Lars E.
(86) International application number: PCT/SE2013/051354
(87) International publication number: WO 2014/081376

(56) References cited:
- WO-A1-2009/078788
- CN-U- 202 285 807
- US-A1- 2010 258 060
- US-A1- 2010 313 814
- US-A1- 2011 253 059
- US-A1- 2011 253 059
- US-B1- 6 427 926

## Description

### TECHNICAL FIELD

The present invention relates to a motivational toy for a pet, comprising a toy having a base with at least one treat area, and said toy further comprising at least one treat cover for covering a pet treat placed in said treat area.

### BACKGROUND ART

The training of pets such as dogs or cats is a popular hobby or profession, but the proper tools for performing such training have been known to be scarce and/or suffering from lack of suitability for the pets in question. One known form of training, especially popular for training dogs but also suitable for other types of animals, is a toy where a number of treats are hidden from view and where the pet by manipulating the toy can make the treats appear and thereby receive a reward for playing with the toy.

One such toy is known from CN202014507U, where food troughs are arranged on a disk and the pet through rotating a cover can access the troughs and thereby remove food or treats. Another toy is disclosed by CN201541575U and shows a feeding toy with multiple chambers for storing food and a gas powered device for spraying the food out of a number of openings in order to attract the attention of the pet. A drawback of these toys, however, is the limited actions available for the pet in playing with the toys, resulting in a lack of stimulation for the intelligence of the pet.

A more challenging toy is shown by PCT/SE2011/050414, allowing for an interaction which requires the pet to move an object covering a treat along a given path to allow for removal of the treat from the toy. This presents more of a challenge to the pet, but is not versatile enough to allow for adaptation to different pets depending on their skills and training needs.

The toy described in US2011/0253059 is structurally simple, and allows for flexible changing of accessories, which opens for a more versatile training. The main purpose of the invention is to give pets the opportunity, through a hide-and-seek process, to find concealed articles in a base platform. By using concealing cups, concealing saucers, and base covers, pets can search the concealing articles along a path of a pre-fitted movable sealing board. When assembled, the edge of the round up board and the base platform form a hide-out path for the concealing cups. The toy consists though of one unit, which limits the possibility of variation.

US2010/0313814 describes a versatile pet feeder which can be assembled and expanded depending on the need, as the pet feeder is composed of a plurality of dishware units provided with embedded coupling assemblies. The versatility presented by the invention has the advantage of reaching out to a broad spectrum of customers.

There is therefore a need for an improved motivational toy for a pet that can be adapted to suit different pets having different cognitive abilities and at the same time present a greater challenge to an intelligent and advanced pet.

### DISCLOSURE OF THE INVENTION

The object of the present invention is to provide a motivational toy for a pet that eliminates or at least minimizes the disadvantages described above. This is achieved through a toy according to the appended claim 1, wherein said toy comprises at least one interacting portion for connection to another toy. Thereby, a larger assembly of toys can be built in order to create a more versatile toy adapted to suit the pet.

According to an aspect of the invention, the treat area is in the form of a path for a treat, said path has at least one outlet, and said treat cover is arranged to be movable along said path and removable from the toy at said outlet. Thereby, the treat cover with the treat can be moved by the pet towards the outlet and be removed there so that the treat becomes available to the pet.

According to another aspect of the invention, at least two toys are provided and are arranged to be attached by use of the interacting portions. Thereby, the larger assemblies mentioned above can be built and the pet can play with each toy in turn or with multiple toys interacting with each other. The interacting portions can in one embodiment of the invention comprise a male and female organ on each toy, thus allowing for connection between the male organ of one toy and the female organ of another to create a secure fastening. In another embodiment, the interacting portion can be an interlocking portion, preferably a positive shape being matched by a negative shape on another toy. It is advantageous if each toy comprises a positive and a negative interlocking interacting portion, so that each toy can be connected to every other toy. In another embodiment the interacting portion can comprise a magnet for magnetic interaction between the toy and another toy. The choice of interacting portions can be made depending on the degree of fastening required to join the toys and avoid the pet being able to break them apart, and can also be made depending on the stability of the material used for the toy. In a preferred embodiment, the interacting portion may be an interlocking portion, similar to a jigsaw puzzle, that allows for an easy and stable fastening of the toys to each other.

According to an aspect of the invention, said path has a greatest path width and said toy further comprising a cover with at least one cover path having a cover path width, said cover being arranged to at least partially cover said base so that said at least one cover path extends along said at least one path, and wherein said cover path width is smaller than said greatest path width. Thereby, the cover allows for movement of objects placed on the base path, but prevents removal of said objects at other points than the outlet. Alternatively, said cover can be integral with said base, eliminating the need for assembly of the motivational toy.

According to another aspect of the invention, said treat cover has a treat cover diameter that is greater than said cover path width but smaller than said greatest path width. Thus, the pet playing with the toy can move the treat cover along the path, using mouth or paws, but needs to move it to an outlet in order to remove the treat cover and eat the treat. Similarly, when preparing the toy for play, the pet owner can insert the treat and treat cover together at the outlet and move them along the path to a desired location further from the outlet, or can alternatively place the treat covers at desired locations before mounting the cover on the base, to allow for convenient preparation of the toy before allowing the pet to play with it.

According to another aspect of the invention, the toy further comprises a pivoting cover mounted on said base, said pivoting cover being arranged along said path and being arranged to pivot and thereby alter a course of said path. Thereby, the path can be varied and the treat cover transported along by manipulation of said pivoting cover by the pet, allowing for additional interaction and increasing the level of difficulty in extracting the treats from the toy.

Preferably, the toys can be mounted in such a way that an outlet of a first toy abuts an outlet of a second of said toys, thus connecting the path of the first toy to the path of the second toy to create a combined path. Thereby, distance for a treat cover to an outlet can be increased and also the difficulty in extracting the treats. Preferably, the treat covers can be manipulated to move along this combined path over more than one toy, to give as varied and complex a task to the pet as possible in extracting the desired treat from the toy.

Many more advantages of the present invention will become apparent from the detailed description provided below.

### BRIEF DESCRIPTION OF THE DRAWINGS

The invention will now be described in more detail with reference to the appended drawings, wherein:
Fig. 1 shows an exploded view of a motivational toy according to a preferred embodiment of the present invention;
Fig. 2 shows a planar view from above of the motivational toy of Fig. 1;
Fig. 3 shows a side view of the motivational toy of Fig. 1;
Fig. 4 shows a planar view from above of two motivational toys according to Fig. 1 being joined together to create a motivational toy assembly according to a preferred embodiment of the invention;
Fig. 5 shows a planar view from above of six motivational toys according to Fig. 1 being joined together to create a motivational toy assembly; and
Fig. 6 shows a perspective view of alternative embodiments of toys according to the invention.

### DETAILED DESCRIPTION OF THE INVENTION

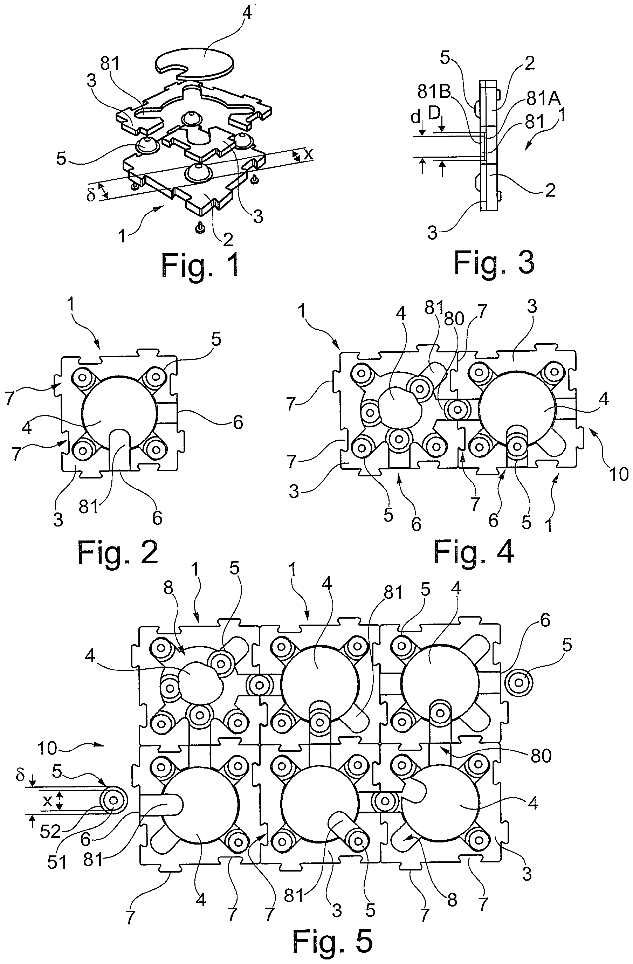

Fig. 1 shows a motivational toy 1 according to a preferred embodiment of the invention, with a base 2 and a cover 3 for mounting on said base. A pivoting cover 4 is provided for mounting on said base 2 along with the cover 3, and a number of treat covers 5 that can each hold a treat for a pet are provided.

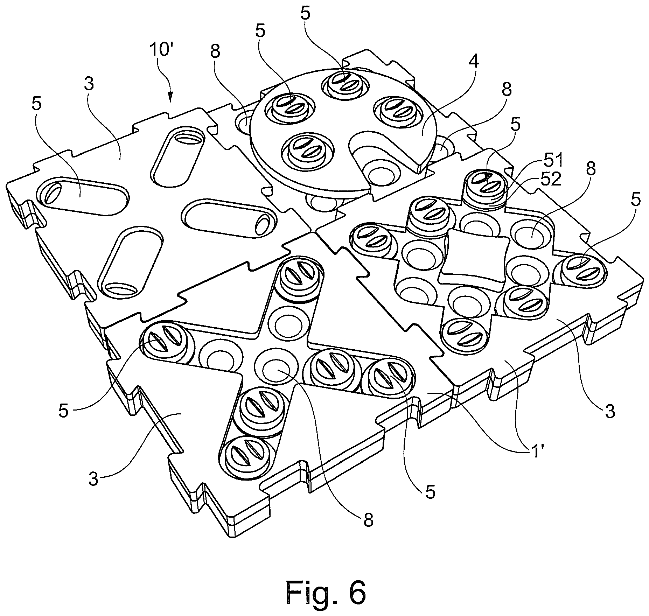

The toy 1 has at least one treat area 8 where a treat can be placed and covered by a treat cover. In the embodiment shown by Fig. 1-5, the treat area 8 is in the form of a treat path 81, where the treat cover 5 can be moved along said path 81 to transport the treat towards an outlet 6, whereas in the embodiments shown by Fig. 6 the treat areas 8 are of different shapes, as will be described further below.

In Fig. 2, the toy 1 is shown after assembly, with the treat covers 5 being placed along the path and between the base 2 and cover 3 in such a way that the treat covers 5 cannot be removed by simply lifting them from the toy 1. Rather, they have to be moved along the path 81 to an outlet 6, where they can be removed and the treat placed inside them recovered for the pet. These limitations to the movements of the treat covers 5 are achieved through the path 81 having (as shown in fig 3) a greatest width D within a lower portion 81A of the path 81 that exceeds a width d of an upper portion 81B of the cover path 81 in the cover 3, and the treat cover 5 having a lower portion 52 with a diameter δ that is greater than the upper cover path width d but smaller than the greatest width D, so that d < δ < D, Thereby, the treat cover 5 can be moved along the path 81 but is held in place vertically by the cover 3 to prevent removal from the stretch of path 81 covered by the cover. The pivoting cover 4 also forms a part of the path 81, so that a pivoting or turning of the pivoting cover 4 allows the pet to move a treat cover 5 into a section of the pivoting cover 4, turn it in a desired way and continue moving the treat cover 5 along a different part of the path 81. The goal is of course to manipulate the toy in such a way that the treat cover 5, covering a treat that is desirable to the pet, is moved from its original position to one of the outlets 6 where it can be removed and the treat can be eaten by the pet.

The toy 1 further comprises at least one interacting portion 7 through which the toy 1 can be fastened to a similar toy to form a larger toy assembly, as will be described in more detail further below.

In Fig. 3, a side view of the assembled toy 1 is shown, having the base 2 and cover 3 mounted together. The treat cover 5 is preferably of a shape that extends above the cover 3, to make it easier for the pet to handle and manipulate it in relation to the toy 1, and accordingly has a central portion 51 that forms a kind of container having (as illustrated in fig 1) a largest diameter x that is smaller than the width d of the upper path 81 B.

Fig. 4 shows a motivational toy assembly 10 with two toys 1 joined together by the interacting portions 7, in this embodiment in the form of interlocking portions such as may be found on a jigsaw puzzle, for instance. In another embodiment the interacting portions 7 could be a male/female coupling organ, a couple of magnets, or any other suitable portions for fastening a first toy 1 to a second toy 1.

In the toy assembly 10, a first toy 1 is fastened to a second toy 1' so that a combined path 80 is created, joining the path 81 of the first toy 1 to that of the second toy 1' and allowing a treat cover 5 to move from the first toy 1 to the second toy 1' towards an outlet 6. The Figure shows the first toy 1 with the pivoting cover 4 described above and the second toy 1' with a smaller central cover 9 that allows the movement of the treat covers 5 along the path 81 unimpeded. When playing with this simple toy assembly 10, comprising only two toys 1, 1', the pet aims to remove the treat covers 5 one by one through any of the outlets 6, so that the treats contained under the treat covers can be eaten. In order to increase the level of difficulty, the pet owner could mount a larger number of toys together, as shown below with reference to Fig. 5 and 6, or could alternatively choose fewer toys 1 but where each is of a more difficult type. When considering the two toys 1, 1' disclosed by Fig. 4, for instance, it can be seen that the first toy 1 with the pivoting cover 4 has a higher level of difficulty than the second toy 1' having the smaller central cover 9, since the first toy 1 requires the pet to operate the pivoting cover 4 in order to move the treat covers 5 towards the outlets 6, whereas the second toy 1' can be manipulated by simply moving the treat covers 5 along the path 81 to the outlets 6.

Fig. 5 shows a toy assembly 10 with six toys 1 that are joined together by the interacting portions 7 so that a combined path 80 is created, formed by paths 81 of each of the toys 1. By manipulating the treat covers 5 and the pivoting covers 4 of the toys 1, the pet can move each treat cover 5 towards an outlet 6 for removal and extraction of the treat.

In Fig. 6, a second toy assembly 10' with four toys 1' is shown, said four toys 1' disclosing alternative embodiments for the toy 1 according to the invention and described above. Each of the toys 1' comprise a base with at least one treat area 8 and at least one treat cover 5 that can be placed over a treat area 8 so that a treat for the pet is concealed by said treat cover 5.

In one of the toys 1', namely the one shown to the far left of the second toy assembly 10', the treat cover 5 is arranged to be able to slide between the base 2 and cover 3, so that the pet can move it in a direction parallel to the base 2 in order to expose the treat in the treat area 8.

In the toy 1' shown at the top of the second toy assembly 10', a pivoting cover 4 is provided and can be pivoted in a direction parallel to the bottom 2 to allow the pet to remove treat covers 5 in order to expose the treats placed in treat areas 8.

In the toys 1' shown at the far right and at the bottom of the second toy assembly 10', a number of treat areas 8 are provided in the form of depressions into the base 2. Unlike the preferred embodiment of the toy 1 described above, no path or outlet is provided along which and towards which the treat cover can be moved by the pet, but rather the treat cover 5 is adapted to be removed directly upwards by the pet and to make the treat underneath thus available.

Each of the toys 1' also comprises at least one interacting portion 7 for connecting the toy 1' to another toy 1' so that the second toy assembly 10' can be built.

It is thus to be noted that the toys 1 being joined to form a toy assembly 10 need not be identical in appearance, but can differ to allow the pet different challenges. It is also worth noting that the combined path 80 of the toy assembly 10 shown in Fig. 5 need not involve the paths 81 of each toy 1, but can leave one or several of the toys 1 to present more isolated puzzles for the pet.

By thus combining identical or similar toys 1 to form larger toy assemblies 10, the pet owner can design and vary the games available to the pet to provide challenges of a level of difficulty that is suitable to the specific pet. The number of toys 1 that make up a toy assembly 10 can also be varied, from only two toys 1 up to any number that is suitable for the pet.

The invention is not to be seen as limited by the preferred embodiments described above, but can be varied within the scope of the appended claims, as will become readily apparent to the person skilled in the art. For instance, the specific layout and dimensions of a toy, as well as the length and complexity of the path can be varied, and the size of a toy can be altered to fit different types of pets.

## Claims

1. Motivational toy assembly (10, 10') for a pet, comprising a toy (1, 1') having a base (2) with at least one treat area (8), and said toy (1, 1') further comprising at least one treat cover (5) for covering a pet treat placed in said treat area (8), **characterized in** said base (2) having at least one interacting portion (7) for connecting said base (2) to another toy (1, 1'); and said treat area (8) being in the form of a path (81) for a treat, said path (81) having at least one outlet (6), and said treat cover (5) being arranged to be movable along said path (81) and removable from the toy (1, 1') at said outlet (6).

2. Motivational toy assembly (10, 10') for a pet according to claim 1, **characterized in** comprising at least two toys (1, 1').

3. Motivational toy assembly (10, 10') according to claim 2, **characterized in** a first of said at least two toys (1, 1') being attachable to a second of said at least two toys (1, 1') by an interacting portion (7) of said first toy (1, 1') being arranged to interact with a corresponding interacting portion (7) of the second toy (1, 1') to fasten said interacting portions (7) to each other.

4. Motivational toy assembly (10. 10') according to claim 3, **characterized in** said interacting portion (7) being an interlocking portion.

5. Motivational toy assembly (10, 10') according to claim 3, **characterized in** said interacting portion (7) being a male organ or a female organ, fitting into a corresponding female or male organ of said other toy (1, 1').

6. Motivational toy assembly (10, 10') according to claim 3, **characterized in** said interacting portion (7) comprising at least one magnet for magnetic interaction with said interacting portion (7) of said other toy (1, 1').

7. Motivational toy assembly (10, 10') according to claim 2, said at least two toys (1, 1') being arranged to be mounted in such a way that an outlet (6) of the first toy abuts an outlet (6) of the second of said toys (1, 1'), thus connecting the path (81) of the first toy (1, 1') to a path (81) of the second toy (1,1') to create a combined path (8).

8. Motivational toy assembly (10, 10') according to claim 7, **characterized in** a treat cover (5) of said first toy (1, 1') being movable along said combined path (8).

9. Motivational toy assembly (10, 10') according to any of the preceding claims, **characterized in** said path (81) having a greatest path width (D) and said toy (1, 1') further comprising a cover (3) with at least one cover path having a cover path width (d), said cover (3) being arranged to at least partially cover said base (2) so that said at least one cover path extends along said at least one path (81), and wherein said cover path width (d) is smaller than said greatest path width (D).

10. Motivational toy assembly according to claim 9, **characterized in** said cover (3) being integral with said base (2).

11. Motivational toy assembly according to claim 9 or 10, **characterized in** said treat cover (5) having a treat cover diameter (δ) that is greater than said cover path width (d) but smaller than said greatest path width (D).

12. Motivational toy assembly according to any of the preceding claims, further comprising a pivoting cover (4) mounted on said base (2), said pivoting cover (4) being arranged along said path (81) and being arranged to pivot and thereby alter a course of said path (81).

## Patentansprüche

1. Motivations-Spielzeuganordnung (10,10') für ein Haustier, aufweisend ein Spielzeug (1,1') mit einer Basis (2) mit wenigstens einem Leckerbereich (8), wobei das Spielzeug (1,1') wenigstens einen Leckerdeckel (5) aufweist, um eine Haustier-Leckerei abzudecken, die in dem Leckerbereich (8) angeordnet ist, **dadurch gekennzeichnet, dass** die Basis (2) wenigstens einen Interaktionsbereich (7) hat, um die Basis (2) mit einem anderen Spielzeug (1,1') zu verbinden; und der Leckerbereich (8) in Form eines Pfades (81) für eine Leckerei vorliegt, wobei der Pfad (81) wenigstens einen Auslass (6) hat, und der Leckerdeckel (5) so angeordnet ist, dass er längs des Pfades (81) beweglich ist und von dem Spielzeug (1,1') an dem Auslass (6) entfernbar ist.

2. Motivations-Spielzeuganordnung (10,10') für ein Haustier gemäß Anspruch 1,
**dadurch gekennzeichnet, dass** sie wenigstens zwei Spielzeuge (1,1') aufweist.

3. Motivations-Spielzeuganordnung (10,10') gemäß Anspruch 2, **dadurch gekennzeichnet, dass** ein erstes der wenigstens zwei Spielzeuge (1,1') an einem zweiten der wenigstens zwei Spielzeuge (1,1') befestigbar ist, durch einen Interaktionsbereich (7) des ersten Spielzeugs (1,1'), der so angeordnet ist, dass er mit einem entsprechenden Interaktionsbereich (7) des zweiten Spielzeugs (1,1') zusammenwirkt, um die Interaktionsbereiche (7) aneinander zu befestigen.

4. Motivations-Spielzeuganordnung (10,10') gemäß Anspruch 3, **dadurch gekennzeichnet, dass** der Interaktionsbereich (7) ein Sperrbereich ist.

5. Motivations-Spielzeuganordnung (10,10') gemäß Anspruch 3, **dadurch gekennzeichnet, dass** der Interaktionsbereich (7) ein männliches oder weibliches Organ ist, das in ein entprechendes weibliches bzw. männliches Organs des anderen Spielzeugs (1,1') passt.

6. Motivations-Spielzeuganordnung (10,10') nach Anspruch 3, **dadurch gekennzeichnet, dass** der Interaktionsbereich (7) wenigstens einen Magneten zur magnetischen Interaktion mit dem Interaktionsbereich (7) des anderen Spielzeugs (1,1') aufweist.

7. Motivations-Spielzeuganordnung (10,10') nach Anspruch 2, wobei die zwei Spielzeuge (1,1') so angeordnet sind, dass sie so befestigt sind, dass ein Auslass (6) des ersten Spielzeugs an einem Auslass (6) des zweiten Spielzeugs (1,1') anliegt, wodurch der Pfad (81) des ersten Spielzeugs (1,1') mit einem Pfad (81) des zweiten Spielzeugs (1,1') verbunden wird, um einen kombinierten Pfad (8) zu erzeugen.

8. Motivations-Spielzeuganordnung (10,10') nach Anspruch 7, **dadurch gekennzeichnet, dass** ein Leckerdeckel (5) des ersten Spielzeugs (1,1') längs des kombinierten Pfads (8) beweglich ist.

9. Motivations-Spielzeuganordnung (10,10') nach einem der vorhergehenden Ansprüche, **dadurch gekennzeichnet**, das der Pfad (81) eine grösste Pfadbreite (D) hat und das Spielzeug (1,1') weiter einen Deckel (3) mit wenigstens einem Deckelpfad mit einer Deckelpfadweite (D) hat, wobei der Deckel (3) so angeordnet ist, dass er wenigstens teilweise die Basis (2) bedeckt, so dass sich der wenigstens eine Deckelpfad längs des wenigstens einen Pfades (81) erstreckt, und wobei die Deckelpfadweite (d) kleiner ist als die größte Pfadweite (D).

10. Motivations-Spielzeuganordnung (10,10') gemäß Anspruch 9, **dadurch gekennzeichnet, dass** der Deckel (3) integral mit der Basis (2) ist.

11. Motivations-Spielzeuganordnung (10,10') nach Anspruch 9 oder 10, **dadurch kennzeichnet, dass** der Leckerdeckel (5) einen Leckerdeckeldurchmesser (δ) hat, der grösser ist als die Deckelpfadweite (d), aber kleiner als die größte Pfadweite (D).

12. Motivations-Spielzeuganordnung (10,10') gemäß einem der vorhergehenden Ansprüche, weiter aufweisend einen Schwenkdeckel (4), angebracht an der Basis (2), wobei der Schwenkdeckel (4) längs des Pfades (81) angeordnet ist und so angeordnet ist, dass er schwenkt dadurch einen Verlauf des Pfades (81) ändert.

## Revendications

1. Ensemble (10, 10') formant un jeu de motivation pour un animal de compagnie, comprenant un jeu (1, 1') ayant une embase (2) avec au moins une zone (8) pour une récompense, et ledit jeu (1, 1') comprenant en outre au moins un couvercle (5) de la récompense destiné à recouvrir une récompense d'animal de compagnie placée dans ladite zone (8) pour une récompense, **caractérisé en ce que** ladite embase (2) comporte au moins une partie d'interaction (7) pour relier ladite embase (2) à un autre jeu (1, 1') ; et ladite zone (8) pour une récompense se présente sous la forme d'un chemin (81) pour accéder à la récompense, ledit chemin (81) comportant au moins une sortie (6) et ledit couvercle (5) de la récompense étant agencé pour être mobile le long dudit chemin (81) et étant apte à être retiré du jeu (1, 1') au niveau de ladite sortie (6).

2. Ensemble (10, 10') formant un jeu de motivation pour un animal de compagnie selon la revendication 1, **caractérisé en ce qu'**il comprend au moins deux jeux (1,1').

3. Ensemble (10, 10') formant un jeu de motivation selon la revendication 2, **caractérisé en ce qu'**un premier desdits au moins deux jeux (1, 1') est apte à être fixé à un deuxième desdits au moins deux jeux (1,1') par une partie d'interaction (7) dudit premier jeu (1, 1') qui est agencée pour interagir avec une partie d'interaction (7) correspondante du deuxième jeu (1, 1') afin de fixer lesdites portions d'interaction (7) l'une à l'autre.

4. Ensemble (10, 10') formant un jeu de motivation selon la revendication 3, **caractérisé en ce que** ladite partie d'interaction (7) est une partie d'inter-verrouillage.

5. Ensemble (10, 10') formant un jeu de motivation selon la revendication 3, **caractérisé en ce que** ladite partie d'interaction (7) est un organe mâle ou un organe femelle, s'adaptant dans un organe femelle ou mâle correspondant dudit autre jeu (1, 1').

6. Ensemble (10, 10') formant un jeu de motivation selon la revendication 3, **caractérisé en ce que** ladite partie d'interaction (7) comprend au moins un aimant pour une interaction magnétique avec ladite partie d'interaction (7) dudit autre jeu (1, 1').

7. Ensemble (10, 10') formant un jeu de motivation selon la revendication 2, lesdits au moins deux jeux (1, 1') étant agencés pour être montés de telle sorte qu'une sortie (6) du premier jeu vient en butée contre une sortie (6) du deuxième desdits jeux (1, 1'), reliant ainsi le chemin (81) du premier jeu (1, 1') à un chemin (81) du deuxième jeu (1, 1') pour créer un chemin combiné (8).

8. Ensemble (10, 10') formant un jeu de motivation selon la revendication 7, **caractérisé en ce qu'**un couvercle (5) de la récompense dudit premier jeu (1, 1') est mobile le long dudit chemin (8) combiné.

9. Ensemble (10, 10') formant un jeu de motivation selon l'une quelconque des revendications précédentes, **caractérisé en ce que** ledit chemin (81) présente une plus grande largeur (D) de chemin et ledit jeu (1, 1') comprend en outre un couvercle (3) ayant au moins une trajectoire de couvercle ayant une largeur (d) de trajectoire de couvercle, ledit couvercle (3) étant agencé pour recouvrir au moins partiellement ladite embase (2) de sorte que ladite au moins une trajectoire de couvercle s'étend le long dudit au moins un chemin (81), et ladite largeur (d) de trajectoire de couvercle est inférieure à ladite plus grande largeur (D) de chemin.

10. Ensemble formant un jeu de motivation selon la revendication 9, **caractérisé en ce que** ledit couvercle (3) est solidaire de ladite embase (2).

11. Ensemble formant un jeu de motivation selon la revendication 9 ou la revendication 10, **caractérisé en ce que** ledit couvercle (5) de la récompense présente un diamètre (δ) de couvercle de récompense supérieur à ladite largeur (d) de trajectoire de couvercle mais inférieur à ladite plus grande largeur (D) de chemin.

12. Ensemble formant un jeu de motivation selon l'une quelconque des revendications précédentes, comprenant en outre un couvercle pivotant (4) monté sur ladite embase (2), ledit couvercle pivotant (4) étant agencé le long dudit chemin (81) et étant agencé pour pivoter et ainsi modifier un cheminement dudit chemin (81).
